# EUROPÄISCHE PATENTANMELDUNG

(11) **EP 0 606 059 A1**
(43) Veröffentlichungstag der Anmeldung: **13.07.1994**
(21) Anmeldenummer: 94100018.4
(22) Anmeldetag: 03.01.1994
(51) Int. Cl.: B01D 3/14, B01D 5/00, B01D 53/18

(54) **Kolonne mit integriertem Wärmetauscher**

(30) Priorität: 06.01.1993 DE 4300131
(71) Anmelder: HOECHST AKTIENGESELLSCHAFT, D-65929 Frankfurt am Main (DE)
(72) Erfinder: Roth, Peter Manfred, D-65817 Eppstein/Ts. (DE); Rewitzer, Siegfried, D-93346 Ihrlerstein (DE)

(57) **Zusammenfassung**

Beschrieben wird eine Kolonne umfassend einen Kolonnenkörper (1) und mindestens einen direkt auf dem Kolonnenkopf angebrachten Wärmetauscher (2). Dieser ist ein Plattenwärmetauscher, der speziell angeordnet ist, so daß sich die kondensierenden Dämpfe und das an den Austauscherflächen erzeugte Kondensat (12) in eine Richtung bewegen.

Eine weitere Ausführungsform der Erfindung betrifft eine Kolonne, die einen Kolonnenkörper (1) und mindestens einen zwischen zwei Böden und/oder Packungsschichten innerhalb der Kolonne angebrachten Plattenwärmetauscher enthält, der als Kondensator betrieben wird und sich innerhalb eines nach oben offenen Auffangbehälters (29) befindet.

Eine dritte Ausführungsform der Erfindung betrifft eine Kolonne, die einen Kolonnenkörper (1) und mindestens einen zwischen zwei Böden und/oder Packungsschichten und/oder im Sumpf innerhalb der Kolonne angebrachten Plattenwärmetauscher (2), der als Verdampfer betrieben wird, umfaßt.

Die erfindungsgemäße Kolonne zeichnet sich durch platzsparende Bauweise aus.

## Beschreibung

Die vorliegende Erfindung betrifft eine Kolonne mit speziell angebrachtem und ausgestaltetem Wärmetauscher.

Kolonnen zum Auftrennen von Stoffgemischen werden auf vielen Gebieten der Technik eingesetzt, beispielsweise in der chemischen Verfahrenstechnik. Bei solchen Kolonnen kann es sich beispielsweise um Destillier-, Rektifizier- und Desorptionskolonnen handeln; diese können kontinuierlich oder diskontinuierlich betrieben werden.

Gemeinsam ist diesen Kolonnen, daß die aufsteigenden Kopfdämpfe nach dem Verlassen der Kolonne kondensiert und/oder gekühlt werden. Der prinzipielle Aufbau einer Kolonne ist beispielsweise in Ullmanns Encyclopädie der technischen Chemie, 4. neubearbeitete und erweiterte Auflage, Band 2, Verfahrenstechnik I (Grundoperationen), Stichwort "Destillation", S. 519, Verlag Chemie (1972) dargestellt.

Das Abkühlen und/oder Kondensieren der Kopfdämpfe erfolgt in sogenannten Kondensatoren, welche in der Regel als sogenannte Rohrbündelwärmetauscher ausgestaltet sind; diese Kondensatoren sind üblicherweise seitlich unterhalb des Kolonnenkopfes angebracht.

Diese Anordnung ist mit einem hohen Aufwand verbunden, beispielweise für Rohrleitungen, Dehnungskompensation, Pumpen oder Vorlagen, und verursacht zusätzliche laufende Betriebskosten. Ferner benötigt diese Lösung einen hohen Platzbedarf und verursacht einen relativ hohen Druckverlust, welcher insbesondere bei Vakuumbetrieb der Kolonne eine höhere Auslegung der Pumpen und somit gesteigerte Investitionskosten zur Folge hat.

Es ist auch bekannt, Rohrbündelwärmetauscher direkt auf dem Kolonnenkopf anzubringen. Solche Ausführungsformen werden im Lehrbuch "Destillier- und Rektifiziertechnik" von E. Kirschbaum, 4. neue erweiterte Auflage, Springer Verlag (1969), S. 410 und S. 472-473, beschrieben. Bei den dargestellten Austauschern handelt es sich um Rohrbündelwärmetauscher mit waagrecht oder senkrecht zur Strömungsrichtung der Kopfdämpfe angeordneten Rohren. Bei diesen Kolonnen werden die aufsteigenden Kopfdämpfe so geführt, daß sie sich im Gegenstrom zum Kondensat bewegen. Außerdem werden diese Wärmeaustauscher als sogenannte Dephlegmatoren betrieben, d.h., die aufsteigenden Kopfdämpfe werden nicht vollständig kondensiert, sondern der Wärmeaustauscher dient einerseits zur Erzeugung des Rücklaufs und übernimmt andererseits eine zusätzliche Trennfunktion. Eine weitere Ausführungsform einer Kolonne umfassend den Einsatz eines Rohrbündelwärmetauschers beschreibt die US-A-2,070,100.

Der Einsatz von Spiralwärmetauschern als Dephlegmatoren auf Kolonnenköpfen wird in CAV, 1985, S. 22-27 beschrieben.

Es hat sich gezeigt, daß beim Betrieb der Kolonne eine Gegenstromführung der zu kondensierenden Kopfdämpfe und des Kondensats zu Stauungen und somit zu Betriebsstörungen führen kann; dies kann insbesondere auftreten, wenn die Kolonne unter Vakuum betrieben wird. Um solche Stauungen bei Gegenstromführung der zu kondensierenden Kopfdämpfe und des Kondensats zu vermeiden, müßten herkömmliche Rohrbündelwärmeaustauscher entsprechend groß dimensioniert werden, wodurch raumsparende Lösungen nicht möglich sind.

Ferner ist bereits vorgeschlagen worden, eine gezielte Kondensation und Verdampfung in der Kolonne durchzuführen. Mit solchen Maßnahmen ist eine Energieeinsparung bzw. eine bessere Trennwirkung der Kolonne möglich. Die stufenweise Wärmeübertragung innerhalb von Rektifikationskolonnen wird im Lehrbuch "Energetische Analyse von Stoffübertragungsprozessen", S. 62-63, Verlag für Grundstoffindustrie (Leipzig) beschrieben. Konkrete Realisierungen für eine solche Kolonne sind dort nicht beschrieben. Der Einsatz von Plattenwärmetauschern in Meerwaserentsalzungsanlagen ist aus der DE-A-4,019,991 bekannt. Die dort beschriebenen Kolonnen weisen keine Böden bzw. Packungsschichten auf.

Es wurde nun gefunden, daß sich die oben genannten Nachteile vermeiden lassen, wenn die Kolonne mit kompakten Plattenwärmetauschern ausgestattet wird, die im Kolonnenkopf und/oder im Kolonnenkörper in einer bestimmten Weise angebracht werden. Insbesondere läßt sich mit der erfindungsgemäßen Kolonne eine kompakte und gewichtsparende Bauweise realisieren.

Eine Ausführungsform der Erfindung betrifft eine Kolonne umfassend einen Kolonnenkörper und mindestens einen direkt auf dem Kolonnenkopf angebrachten Wärmetauscher, dadurch gekennzeichnet, daß es sich bei dem Wärmetauscher um einen Plattenwärmetauscher handelt, der so ausgestaltet ist, daß die vom Kolonnenkörper (1) aufsteigenden Kopfdämpfe (11) durch einen inneren Hohlraum (26) geführt und am Dach der Anordnung um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen oder wobei der Plattenwärmetauscher (2) asymmetrisch im oberen Teil der Kolonne angebracht ist, so daß die vom Kolonnenkörper (1) aufsteigenden Kopfdämpfe (11) am Wärmetauscher (2) vorbei geführt und am Dach der Anordnung um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen.

Für den Fall, daß der Plattenwärmetauscher als Kondensator betrieben wird, wird dieser so angeordnet, daß die kondensierenden Dämpfe und das an den Austauscherflächen erzeugte Kondensat sich in eine Richtung bewegen. Bei der Anbringung im Sumpf wird der Plattenwärmetauscher als Verdampfer betrieben. Eine weitere Ausgestaltung der Erfindung betrifft eine Kolonne umfassend einen Kolonnenkörper und mindestens einen zwischen zwei Böden und/oder Packungsschichten innerhalb der Kolonne angebrachten Wärmetauscher, der als Kondensator betrieben wird, dadurch gekennzeichnet, daß der Wärmetauscher ein Plattenwärmetauscher ist, der innerhalb eines nach oben offenen Auffangbehälters (29) zwischen zwei Böden (30) und/oder Packungsschichten im Innern des Kolonnenmantels (40) in den Kolonnenkörper (1) integriert ist, so daß die von den unteren Böden und/oder Packungsschichten aufsteigenden Dämpfe (11) am Wärmetauscher (2) vorbei geführt und am darüberliegenden Boden oder der darüberliegenden Packung zumindest zum Teil um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen.

Eine weitere Ausgestaltung der Erfindung betrifft eine Kolonne umfassend einen Kolonnenkörper und mindestens einen innerhalb der Kolonne angebrachten Wärmetauscher, der als Verdampfer oder als Kühler betrieben wird, dadurch gekennzeichnet, daß der Wärmetauscher ein Plattenwärmetauscher ist, der zwischen zwei Böden und/oder Packungsschichten innerhalb eines nach oben offenen Auffangbehälters und/oder im Sumpf angebracht ist.

In diesen Ausgestaltungen der erfindungsgemäßen Kolonne bewegen sich die kondensierenden Dämpfe und das Kondensat in eine Richtung, während bei der Ausgestaltung als Verdampfer die gebildeten Dämpfe den nach oben hin offenen Auffangbehälter in Richtung des darüber liegenden Bodens oder der darüber liegenden Packungsschicht verlassen. Die Versorgung des Verdampfers mit Flüssigkeit erfolgt über eine Zuführleitung, die Flüssigkeit von den darüberliegenden Teilen der Kolonne oder von außen in den Auffangbehälter leitet.

In einer weiteren Ausgestaltung der Erfindung läßt sich auch Flüssigkeit aus den darüberliegenden Teilen der Kolonne in den Auffangbehälter leiten und mittels des Wärmetauschers kühlen. Die gekühlte Flüssigkeit fließt anschließend über den nach oben offenen Auffangbehälter in Richtung der darunterliegenden Teile der Kolonne ab. Diese Variante bietet sich insbesondere bei Absorptionskolonnen an.

Der Betrieb der erfindungsgemäßen Kolonne mit zwischen zwei Böden oder Packungsschichten innerhalb der Kolonne angebrachten Wärmetauschern läßt die gezielte Wärmeabfuhr und/oder Wärmezufuhr innerhalb der Kolonne zu. Mit diesen Maßnahmen ist es möglich, gezielt Energie einzusparen oder eine verbesserte Trennwirkung zu erreichen. Neben der Einsparung von Heizenergie ermöglicht diese Ausführungsform auch die Nutzung von bisher nicht zugänglichen Abwärmequellen auf niedrigem Temperaturniveau; ferner läßt sich der Kühlmittelverbrauch reduzieren, da beispielsweise Kühlwässer verschiedener Temperatur eingesetzt werden können. Auch beim Seitenabzug von Dämpfen oder Flüssigkeiten läßt sich ein dazwischengeschalteter Wärmetauscher vorteilhaft einsetzen.

Die erfindungsgemäße Kolonne kann zu beliebigen Einsatzzwecken verwendet werden, zu welchen Kolonnen üblicherweise eingesetzt werden, beispielsweise zur Durchführung von chemischen Reaktionen, vorzugsweise aber zum Auftrennen von Stoffgemischen, insbesondere von Flüssigkeitsgemischen.

Die erfindungsgemäße Kolonne kann beliebig ausgestaltet und an den beabsichtigten Einsatzzweck angepaßt sein.

Beispiele für erfindungsgemäß einzusetzende Kolonnen sind Bodenkolonnen mit beliebigen Böden, wie Siebböden, Glockenböden, Ventilböden, Tunnelböden oder Zentrifugalböden, oder Füllkörperkolonnen mit beliebigen Füllkörpern, wie Raschigringen, Pallringen, Berlsätteln, Intaloxsätteln oder Interpackkörpern, oder auch für den Vakuumbetrieb speziell ausgestaltete Kolonnen, wie Rieselfilmkolonnen, Kolonnen mit Sulzer-Packungen oder Dünnschichtrektifikatoren.

Der erfindungsgemäß eingesetzte Wärmeaustauscher muß von so kompakter Bauweise sein, daß eine Anbringung direkt auf dem Kolonnenkopf oder innerhalb des Kolonnenkörpers möglich ist. Für diesen Zweck eignen sich Plattenwärmetauscher. Diese Wärmetauschertypen zeichnen sich ohne zusätzliche konstruktive Maßnahmen bereits durch eine kompakte Bauweise aus. Sie sind beispielsweise in Ullmann's Encyclopedia of Industrial Chemistry, Fifth completely revised edition, Volume B3, Unit Operations II, Stichwort "Heat Exchange", S. 2-10 bis 2-17, Verlag Chemie (1988) beschrieben.

Der Wärmetauscher muß im Kopf der Kolonne so angeordnet sein, daß die kondensierenden Dämpfe und das an den Austauscherflächen erzeugte Kondensat sich in eine Richtung bewegen. Dazu werden die aus der Kolonne aufsteigenden Kopfdämpfe an den Wärmetauscherflächen vorbei nach oben geleitet und durch Umlenken auf diese Wärmetauscherflächen geführt, wo sie üblicherweise vollständig kondensiert werden. Sind nichtkondensierbare Stoffe, beispielsweise Gase, in den Dämpfen vorhanden, so kann durch Nachschaltung eines oder mehrerer separat gekühlter Wärmetauscher eine bessere Kondensation erreicht werden.

Plattenwärmetauscher weisen eine wesentlich höhere Wärmeübertragungsfläche je Volumeneinheit auf, als dies bei den konventionell eingesetzten Rohrbündeltauschern üblich ist. Diese Fläche, bezogen auf die Volumeneinheit, ist bei Plattenwärmetauschern im allgemeinen um ein Vielfaches größer als bei Rohrbündelwärmetauschern.

Ferner ist der Wärmedurchgangskoeffizient bei Plattenwärmetauschern mindestens ebenso gut - in der Regel deutlich besser - als der Wärmedurchgangskoeffizient von Rohrbündelwärmetauschern.

Ein weiterer Vorteil von Plattenwärmetauschern gegenüber Rohrbündelwärmetauschern ist im deutlich geringeren Druckverlust des erstgenannten Austauschertyps zu sehen.

Die erfindungsgemäße Kolonne eignet sich daher insbesondere zum Vakuumbetrieb und besitzt daher vorzugsweise mindestens einen Anschluß an eine Vakuumanlage.

Die Erfindung betrifft auch die Verwendung von Plattenwärmetauschern als Kondensatoren oder Verdampfer zum direkten Einbau zwischen zwei Böden und/oder Packungsschichten und/oder im Sumpf einer Kolonne oder auf einen Kolonnenkopf, insbesondere als Kondensatoren zum Abkühlen und/oder Kondensieren von Dämpfen, die in Kolonnenköpfen anfallen.

Mit der erfindungsgemäßen Kolonne werden Wärmedehnungen und die damit verbundenen Spannungen auf einfache Weise kompensiert.

In den Figuren 1, 2a, 2b, 3 und 4 wird die erfindungsgemäße Kolonne beispielhaft beschrieben.

In Figur 1 ist eine Ausführungsform der erfindungsgemäßen Kolonne im Längsschnitt dargestellt.

In Figur 2a ist eine Ausführungsform eines Plattenwärmetauschers im Längsschnitt dargestellt; in Figur 2b ist dieser Kondensator im Querschnitt dargestellt.

In Figur 3 wird die asymmetrische Anordnung eines Plattenwärmetauschers im Längsschnitt dargestellt.

Figur 4 stellt eine Ausführungsform der erfindungsgemäßen Kolonne dar, worin ein Plattenwärmetauscher symmetrisch zwischen zwei Böden oder Packungsschichten innerhalb der Kolonne angebracht ist; in der dargestellten Form läßt sich dieser Wärmetauscher als Kondensator oder als Verdampfer oder als Flüssigkeitskühler betreiben.

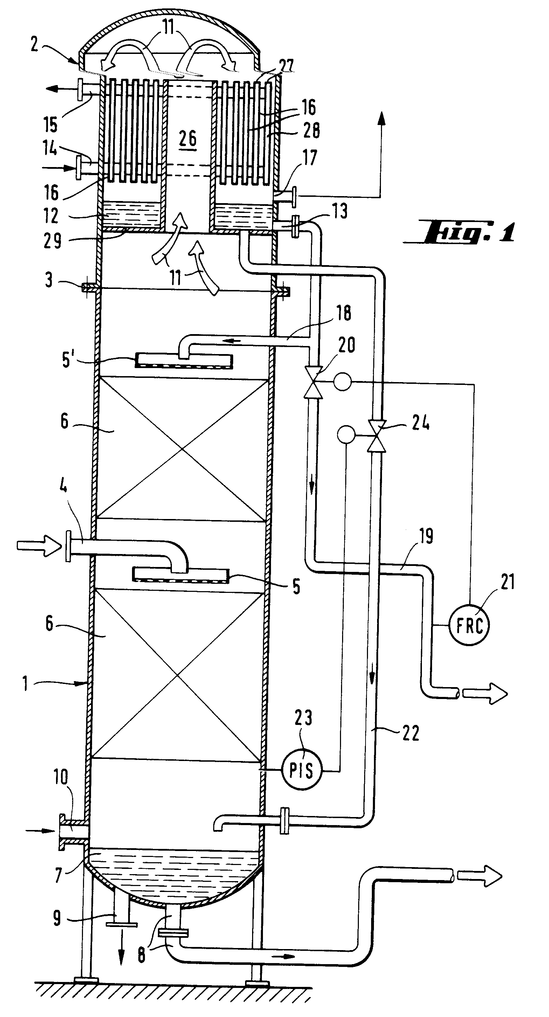

Die in Fig. 1 dargestellte Kolonne weist einen Kolonnenkörper (1) auf, der einen aufgesetzten Wärmetauscher (2) enthält, welcher als Kondensator betrieben wird. Die Verbindung beider Bauteile erfolgt durch eine Verbindung (3), beispielsweise durch eine Flanschverbindung oder durch eine Schweißverbindung. Der Kolonnenkörper (1) weist auf halber Höhe einen Zulauf (4) für das aufzutrennende Flüssigkeitsgemisch auf, welcher in einen Verteilerboden (5) mündet.

Der Zulauf der Flüssigkeit kann auch an anderer Stelle der Kolonne erfolgen, beispielsweise im Sumpf. Ferner ist Mehrfachzulauf möglich.

Der Kolonnenkörper (1) ist - wie üblich - mit Böden oder Füllkörpern (6) versehen. Das über den Zulauf (4) in die Kolonne eingeführte Flüssigkeitsgemisch wird in der Kolonne in schwerer siedende und sich nach unten bewegende Bestandteile und in leichter siedende und sich nach oben bewegende Bestandteile aufgetrennt. Im unteren Teil der Kolonne befindet sich das Sumpfprodukt (7), welches über den Ablauf (8) aus der Kolonne entfernt werden kann. Die Heizung der Kolonne erfolgt durch Beheizung des Sumpfproduktes (7), welches zu diesem Zweck über die Zu- und Ableitungen (10) und (9) über einen Wärmetauscher (nicht dargestellt) geführt wird.

Die Beheizung kann indirekt, z.B. über einen Wärmetauscher, oder direkt, z.B. über Direktdampf über Zuleitung (10) erfolgen. Ferner kann die Kolonne mittels Gas, insbesondere Inertgas, betrieben werden (Stripper). Wird die Kolonne als Absorberkolonne betrieben, so kann über die Zuleitung (10) die zu reinigende Abluft eingeführt werden.

Die aufsteigenden Kopfdämpfe (11) werden im Wärmetauscher (2) abgekühlt und schlagen sich als Kondensat (12) beispielsweise im Auffangbehälter (29) nieder. Dieses kann über den Ablauf (13) aus der Kolonne entfernt werden. Der Wärmetauscher (2) weist Zu- und Ableitungen (14) und (15) für das Kühlmedium, in der Regel Wasser, auf. In der Darstellung ist der Wärmetauscher (2) als Plattenwärmetauscher dargestellt. Die Kondensation der Kopfdämpfe (11) erfolgt an den Kondensatorplatten (16). Ferner weist der Wärmetauscher (2) eine Öffnung (17) für die Be- oder Entlüftung der Kolonne auf; diese Öffnung kann auch als Vakuumanschluß dienen. Diese Öffnung (17) befindet sich vorzugsweise oberhalb der Wärmetauscherflächen (nicht dargestellt) und ist vom oberen Kopfraum durch eine geeignete Konstruktion isoliert, so daß die aufsteigenden Kopfdämpfe zunächst den Wärmetauscher (2) passieren müssen und nicht direkt in die Öffnung (17) gelangen.

Das Kondensat (12) kann ganz oder zum Teil in den Kolonnenkörper (1) zurückgeführt werden. Dies dient dem an sich bekannten Einstellen des Rücklaufverhältnisses. Dazu wird üblicherweise ein Teil des Kondensats (12) über die Rückflußleitung (18) in den oberen Teil des Kolonnenkörpers zurückgeführt; diese Leitung mündet vorzugsweise in einen Verteilerboden (5').

In einer besonders bevorzugten nicht dargestellten Ausführungsform wird die Rückflußleitung (18) separat aus dem Auffangbehälter (29) herausgeführt und über ein Syphon dem Verteilerboden (5') zugeleitet. Diese Ausführungsform verhindert ein Leerlaufen des Auffangbehälters (29) und gestattet eine vereinfachte Messung der rückgeleiteten Flüssigkeitsmenge.

Das Verhältnis zwischen rückfließendem und über die Leitung (19) aus der Kolonne entferntem Teil des Kondensats wird zweckmäßigerweise mittels eines Regelkreises (21) überwacht, beispielsweise mittels eines Flow-Recorder-Controllers (FRC), und über ein Ventil (20) eingestellt.

In einer besonders bevorzugten Ausführungsform der erfindungsgemäßen Kolonne ist eine weitere Rückflußleitung (22) vorgesehen. Die Einbringung der Flüssigkeit in den Sumpf erfolgt vorzugsweise offen (wie dargestellt), kann aber auch durch eine Abtauchung erfolgen.

Diese Rückflußleitung (22) gestattet ein Fluten oder Verdünnen des Sumpfproduktes (7) für den Fall, daß sich im Innern der Kolonne ein explosionsfähiges Gemisch bildet oder die Gefahr der Bildung eines solchen Gemisches besteht. Durch gezielte Zugabe von Kondensat (12) läßt sich die Zusammensetzung des Sumpfproduktes (7) ändern und somit auch die Zusammensetzung der Dampf- und Flüssigkeitsphase in der Kolonne. Diese Ausführung der erfindungsgemäßen Kolonne gestattet auf einfache Weise eine Kontrolle der Dampfphase und einen Betrieb abseits der Explosionsgrenzen des Dampfgemisches, beispielsweise bei der destillativen Auftrennen von Gemischen aus Wasser und N-Methylpyrrolidon bzw. aus Wasser und Dimethylformamid. Die Überwachung des explosionsgefährdeten Dampfraumes kann mittels eines Druckmessers (23) erfolgen, beispielsweise eines Pressure-Indicator-Switch (PIS). Beim Erreichen eines oberen Grenzwertes infolge einer Undichtigkeit in der Vakuumkolonne und einem dadurch hervorgerufenen Lufteintritt öffnet das Ventil (24) und flutet oder verdünnt das Sumpfprodukt (7) über eine Rückflußleitung (22) mit Kondensat (12) aus dem Kolonnenkopf.

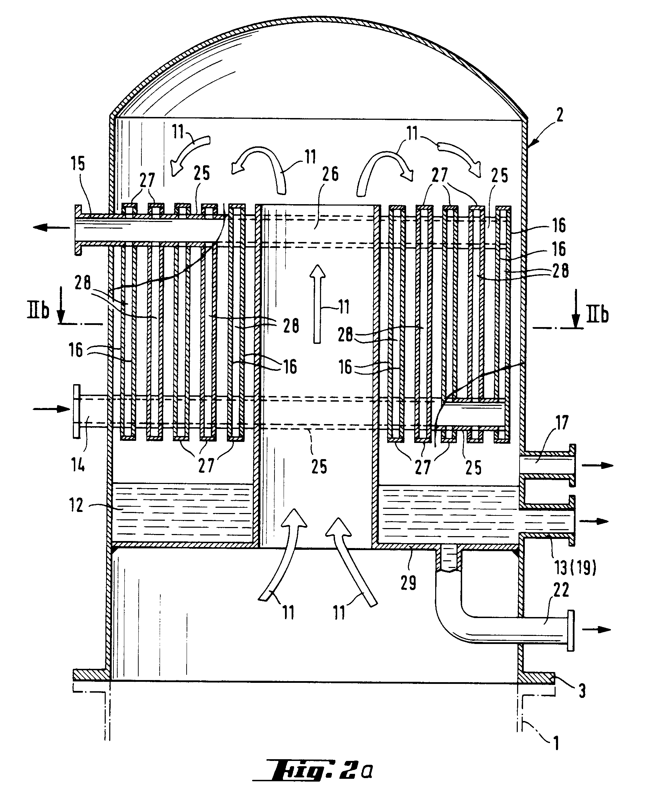

In Fig. 2a ist eine bevorzugte Bauweise des erfindungsgemäß einzusetzenden Plattenwärmetauschers im Längsschnitt dargestellt. Die vom Kolonnenkörper her aufsteigenden Kopfdämpfe (11) werden an den Platten (16) niedergeschlagen und werden als Kondensat (12) im unteren Teil des Wärmetauschers (2) in einem Auffangbehälter (29) gesammelt. Die Entnahme des Kondensats (12) erfolgt über den Ablauf (13).

In einer bevorzugten hier nicht dargestellten Ausführungsform ist eine Rückflußleitung (18) vorgesehen, die - wie bei Fig. 1 beschrieben - vorzugsweise als Syphonleitung ausgeführt ist.

Die Kühlung der Platten (16) erfolgt über ein Kühlmittel, das über Rohre (25) zu den einzelnen Platten (16) geleitet wird. Die Versorgung des Wärmetauschers (2) mit Kühlmittel erfolgt über die Zu- und Ableitungen (14) und (15). Die Platten (16) sind in der dargestellten Form jeweils paarweise angeordnet und an den Längsenden mit einem Abstandshalter (27) verschweißt. Auf diese Weise entsteht zwischen jedem Plattenpaar ein innerer Hohlraum (28), durch den das Kühlmittel geleitet wird.

In einer bevorzugten hier nicht dargestellten Ausführungsform werden ein oder mehrere am Mantel befindliche Plattenpaare separat mit Kühlmittel vesorgt und dienen als Nachkühler.

Über eine Be- oder Entlüftungsöffnung (17) kann ein Druckausgleich in der Kolonne hergestellt werden; diese kann auch als Vakuumanschluß genutzt werden. Wie in Fig. 1 beschrieben, ist diese Öffnung vorzugsweise oberhalb des Wärmetauschers angebracht.

In der dargestellten Ausführungsform werden die vom Kolonnenkörper aufsteigenden Kopfdämpfe (11) durch einen inneren Hohlraum (26) geführt und am Dach der Anordnung um 180° umgelenkt. Sodann treffen die Dämpfe auf die Kondensatorplatten (16), wo sie sich als Kondensat (12) niederschlagen; Dämpfe und Kondensat bewegen sich sodann in einer Richtung nach unten wobei die Dämpfe (11) vollständig oder teilweise kondensieren. Das Kondensat (12) wird im Auffangbehälter (29) gesammelt.

Die Platten (16) können im Kondensator parallel oder konzentrisch angeordnet sein.

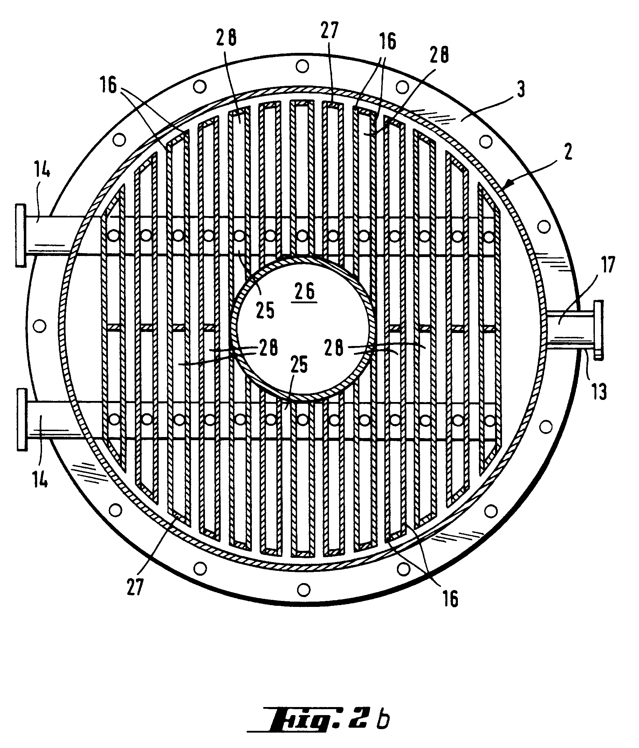

In Fig. 2b ist eine Ausführungsform mit paralleler Anordnung dargestellt, die eine symmetrische Strömung bewirkt und eine optimale Raumnutzung darstellt. Diese Lösung ist, ebenso wie die konzentrische Anordnung, konstruktiv relativ aufwendig.

Die Kopfdämpfe aus dem Kolonnenkörper steigen im Wärmetauscher (2) zunächst durch den inneren Hohlraum (26) auf, bevor sie sich nach unten an den Platten (16) niederschlagen.

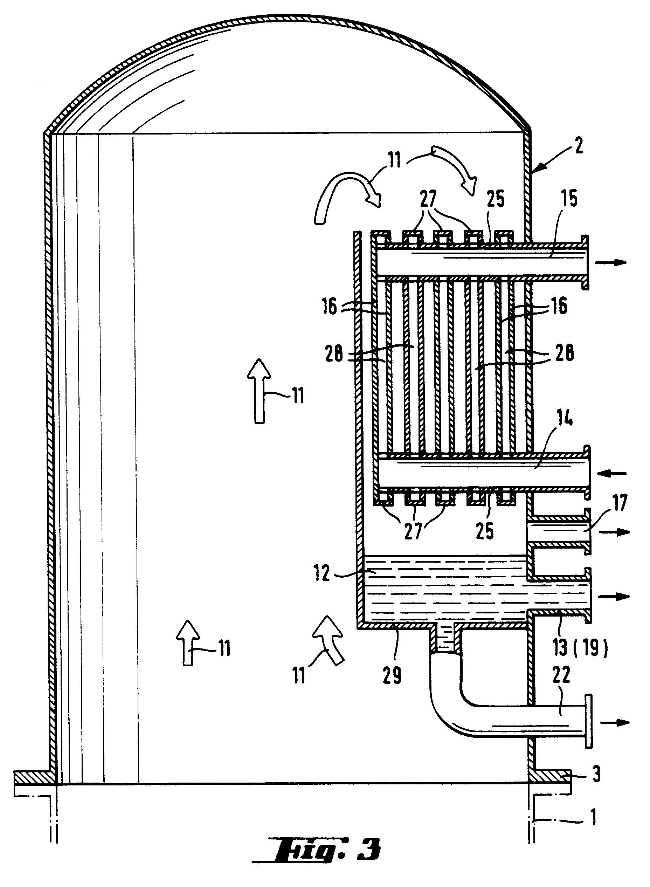

In Fig. 3 ist eine weitere konstruktive Ausführung der erfindungsgemäßen Kolonne dargestellt. Die Funktion und die Benennung der einzelnen Elemente entspricht derjenigen gemäß Fig. 2a und 2b. Die asymmetrische Bauweise gemäß Fig. 3 weist Strömungsverhältnisse auf, die im Vergleich zur Konstruktion der Fig. 2a und 2b nicht so günstig sind; dafür ist diese Konstruktion einfacher zu realisieren.

Die in den Fig. 1 bis 3 dargestellten Ausführungformen lassen sich ohne weiteres auch zwischen zwei Böden oder Packungsschichten innerhalb eines Kolonnenkörpers (1) anordnen. Dabei wird der Wärmetauscher (2) asymmetrisch oder symmetrisch zwischen zwei Böden und/oder Packungsschichten innerhalb eines nach oben offenen Auffangbehälters (29) in den Kolonnenkörper (1) integriert. Anstelle der Umlenkung der zu kondensierenden Dämpfe am Kolonnenkopf findet bei dieser Ausführungsform eine Umlenkung zumindest eines Teils der Dämpfe am darüberliegenden Boden oder der darüberliegenden Packung statt. Diese Ausführung der Kolonne ist besonders bevorzugt, wenn eine gezielte Kondensation von Dämpfen, die zwischen zwei Böden und/oder Packungsschichten aufsteigen, gewünscht ist. Diese Maßnahme ist besonders angebracht im Rahmen von Energieeinsparungen oder bei zu kondensierenden dampfförmigen Seitenabzügen.

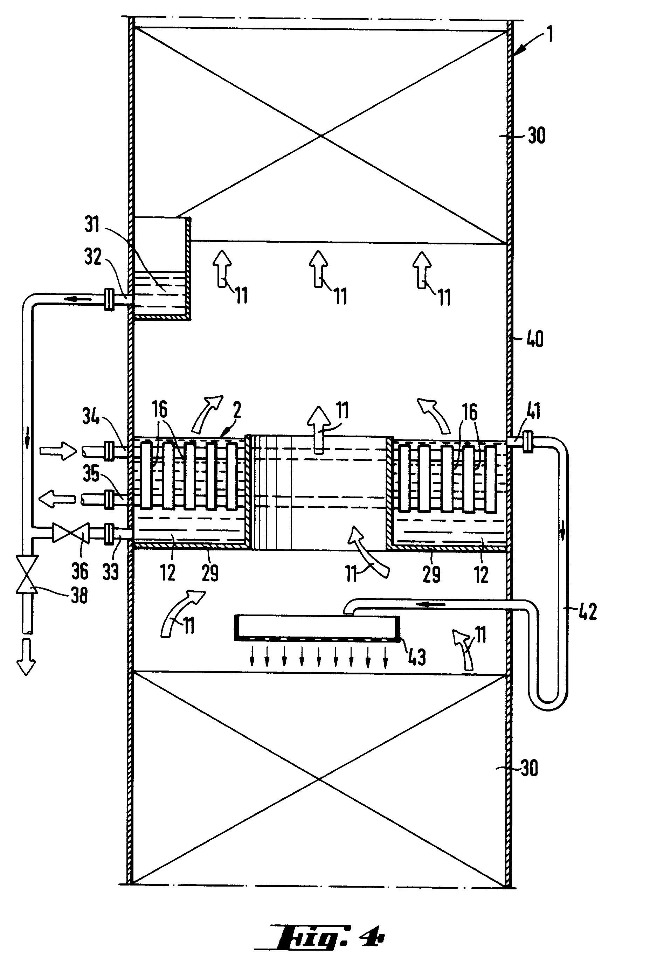

In Fig. 4 ist eine weitere bevorzugte Ausführungsform der erfindungsgemäßen Kolonne dargestellt, worin ein Wärmetauscher (2) asymmetrisch zwischen zwei Böden (30) oder Packungsschichten innerhalb eines nach oben offenen Auffangbehälters (29) im Kolonnenkörper (1) angeordnet ist. Auffangbehälter (29) und Wärmetauscher (2) sind im Innern des Kolonnenmantels (40) angebracht. Die vom unteren Boden (30) bzw. der Packungsschicht aufsteigenden Dämpfe (11) werden am Wärmetauscher (2), der in der dargestellten Form als Plattenwärmetauscher ausgeführt ist, vorbei zum darüberliegenden Boden (30) bzw. zur darüberliegenden Packungsschicht geführt. Die hier befindliche Flüssigkeit (31) wird über einen Abführstutzen (32) abgeleitet, und dem Auffangbehälter (29) über eine Zuführleitung (33) zugeleitet oder gegebenenfalls überhaupt aus der Kolonne abgezogen. Die Steuerung dieser verschiedenen Flüssigkeitströme erfolgt zweckmäßig mittels der Ventile (36) und (38). In der in Fig. 4 dargestellten Form wird der Wärmetauscher (2) als Verdampfer betrieben. Dazu wird die Flüssigkeit (31) von den höherliegenden Teilen der Kolonne zumindest teilweise in den Auffangbehälter (29) zurückgeführt und bedeckt als Flüssigkeit (12) vorzugsweise vollständig die Platten (16). Der Wärmetauscher (2) wird über die Zu- und Ableitungen (34) und (35) mit Heizmedium versorgt, beispielsweise mit kondensierendem Heißdampf oder mit Heißwasser. Die Flüssigkeit (12) wird teilweise verdampft und der Dampf verläßt den Auffangbehälter (29) über dessen obere Öffnung und wird zusammen mit den vom unteren Boden bzw. der Packungsschicht aufsteigenden Dämpfen (11) dem darüberliegenden Boden (30) bzw. der Packungsschicht zugeleitet. Die nicht verdampfte Flüssigkeit (12) wird aus dem Auffangbehälter (29) über den Abführstutzen (41) dem unteren Boden (30) bzw. der Packungsschicht zugeleitet. Dafür wird insbesondere eine als Syphon ausgestaltete Abführleitung (42) verwendet, die in einen Verteiler (43) mündet.

In einer weiteren Ausgestaltung der Kolonne nach Fig. 4 wird Flüssigkeit (31) kontinuierlich aus den über dem Wärmetauscher (2) liegenden Böden (3) bzw. Packungsschichten in den Auffangbehälter (29) zugeführt und der Wärmetauscher (2) wird als Kühler betrieben, also über die Zu- und Ableitungen (34) und (35) mit Kühlmittel, beispielsweise mit Kühlwasser, versorgt. Im Auffangbehälter (29) wird die Flüssigkeit (12) gekühlt und fließt nach Auffüllen des Auffangbehälters über den Abführstutzen (41) in Richtung der darunterliegenden Böden bzw. Packungsschichten ab. Diese Ausgestaltung der erfindungsgemäßen Kolonne eignet sich insbesondere beim Betrieb als Absorptionskolonne.

## Patentansprüche

1. Kolonne umfassend einen Kolonnenkörper (1) und mindestens einen direkt auf dem Kolonnenkopf angebrachten Wärmetauscher (2), dadurch gekennzeichnet, daß es sich bei dem Wärmetauscher (2) um einen Plattenwärmetauscher handelt, der so ausgestaltet ist, daß die vom Kolonnenkörper (1) aufsteigenden Kopfdämpfe (11) durch einen inneren Hohlraum (26) geführt und am Dach der Anordnung um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen oder wobei der Plattenwärmetauscher (2) asymmetrisch im oberen Teil der Kolonne angebracht ist, so daß die vom Kolonnenkörper (1) aufsteigenden Kopfdämpfe (11) am Wärmetauscher (2) vorbei geführt und am Dach der Anordnung um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen.

2. Kolonne umfassend einen Kolonnenkörper (1) und mindestens einen zwischen zwei Böden (30) und/oder Packungsschichten innerhalb der Kolonne angebrachten Wärmetauscher (2), der als Kondensator betrieben wird, dadurch gekennzeichnet, daß der Wärmetauscher (2) ein Plattenwärmetauscher ist, der innerhalb eines nach oben offenen Auffangbehälters (29) zwischen zwei Böden (30) und/oder Packungsschichten im Innern des Kolonnenmantels (40) in den Kolonnenkörper (1) integriert ist, so daß die von den unteren Böden und/oder Packungsschichten aufsteigenden Dämpfe (11) am Wärmetauscher (2) vorbei geführt und am darüberliegenden Boden oder der darüberliegenden Packung zumindest zum Teil um 180° umgelenkt werden, und sodann auf die Kondensatorplatten (16) auftreffen, wo sie sich als Kondensat (12) niederschlagen und sich zusammen mit den zu kondensierenden Dämpfen nach unten bewegen.

3. Kolonne umfassend einen Kolonnenkörper (1) und mindestens einen innerhalb der Kolonne angebrachten Wärmetauscher (2), der als Verdampfer oder als Kühler betrieben wird, dadurch gekennzeichnet, daß der Wärmetauscher (2) ein Plattenwärmetauscher ist, der zwischen zwei Böden (30) und/oder Packungsschichten innerhalb eines nach oben offenen Auffangbehälters (29) und/oder im Sumpf angebracht ist.

4. Kolonne gemäß einem der Ansprüche 1, 2 oder 3, dadurch gekennzeichnet, daß diese mindestens einen Anschluß an eine Vakuumanlage aufweist.

5. Kolonne gemäß Anspruch 1, dadurch gekennzeichnet, daß eine Rückflußleitung (18) vorgesehen ist, die es gestattet, das Kondensat (12) ganz oder zum Teil in den Kolonnenkörper (1) zurückzuführen.

6. Kolonne gemäß Anspruch 5, dadurch gekennzeichnet, daß die Rückflußleitung (18) in Form eines Syphons ausgeführt ist.

7. Kolonne gemäß Anspruch 1, dadurch gekennzeichnet, daß eine Rückflußleitung (22) vorgesehen ist, die ein Fluten oder Verdünnen des Sumpfproduktes (7) mit Kondensat (12) gestattet.

8. Kolonne gemäß Anspruch 1, dadurch gekennzeichnet, daß der Wärmetauscher (2) ein Plattenwärmetauscher ist, dessen Kondensatorplatten (16) parallel oder konzentrisch zueinander angeordnet sind.

9. Kolonne gemäß Anspruch 3, dadurch gekennzeichnet, daß der Plattenwärmetauscher im Sumpf angebracht ist und als Verdampfer betrieben wird.

10. Kolonne gemäß Anspruch 3, dadurch gekennzeichnet, daß der Wärmetauscher (2) als Verdampfer betrieben wird, Zu- und Ableitungen (33) und (32) vorgesehen sind, mit denen Flüssigkeit aus dem darüberliegenden Boden (30) bzw. der darüberliegenden Packungsschicht (31) abgeleitet und dem Auffangbehälter (29) zugeleitet werden kann.

11. Kolonne gemäß Anspruch 3, dadurch gekennzeichnet, daß der Wärmetauscher (2) als Kühler betrieben wird, Zu- und Ableitungen (33) und (32) vorgesehen sind, mit denen zumindest ein Teil der im darüberliegenden Boden (30) bzw. der darüberliegenden Packungsschicht vorhandenen Flüssigkeit aus diesem Boden bzw. dieser Packungsschicht abgeleitet werden kann und dem Auffangbehälter (29) zugeleitet werden kann.

12. Verwendung von Plattenwärmetauschern als Kondensatoren oder Verdampfer zum direkten Einbau zwischen zwei Böden und/oder Packungsschichten und/oder im Sumpf, einer Kolonne oder auf einen Kolonnenkopf.

13. Verwendung von Plattenwärmetauschern gemäß Anspruch 12 als Kondensatoren zum Abkühlen und/oder Kondensieren von Dämpfen, die in Kolonnenköpfen anfallen.

14. Verwendung von Plattenwärmetauschern gemäß Anspruch 12 als Kondensatoren zum Abkühlen und/oder Kondensieren von Dämpfen bzw. zum Verdampfen von Kondensaten, die in Kolonnenböden und/oder Packungsschichten anfallen.
